# EUROPÄISCHE PATENTSCHRIFT

(11) **EP 1 554 795 B1**
(45) Veröffentlichungstag und Bekanntmachung des Hinweises auf die Patenterteilung: **28.03.2007**
(21) Anmeldenummer: 03750710.0
(22) Anmeldetag: 13.10.2003
(51) Int. Cl.: H02N 2/02, H01L 41/09, F02M 59/46

(54) **LINEARSCHRITTMOTOR**
LINEAR STEP-BY-STEP MOTOR
MOTEUR PAS-A-PAS LINEAIRE

(30) Priorität: 17.10.2002 DE 10248426
(43) Veröffentlichungstag der Anmeldung: 20.07.2005
(73) Patentinhaber: Deutsches Zentrum für Luft- und Raumfahrt e.V., 51147 Köln (DE)
(72) Erfinder: BREITBACH, Elmar, 37075 Göttingen (DE)
(74) Vertreter: Rehberg Hüppe + Partner
(86) Internationale Anmeldenummer: PCT/EP2003/011317
(87) Internationale Veröffentlichungsnummer: WO 2004/036728

(56) Entgegenhaltungen:
- EP-A- 0 790 402
- DE-C- 19 640 108
- US-A- 5 332 942
- US-A- 5 780 957
- US-A- 6 048 307
- KIM J ET AL: "A hybrid inchworm linear motor" MECHATRONICS, PERGAMON PRESS, OXFORD, GB, Bd. 12, Nr. 4, Mai 2002 (2002-05), Seiten 525-542, XP004339181 ISSN: 0957-4158

## Beschreibung

Die Erfindung betrifft einen Linearschrittmotor mit den Merkmalen des Oberbegriffs des Patentanspruchs 1.

### STAND DER TECHNIK

Ein Linearschrittmotor mit einem in zwei entgegengesetzten Richtungen längsverfahrbaren Stab und mit zwei Blockiervorrichtungen, mit denen der Stab wechselweise festlegbar ist, ist unter der Bezeichnung Inch-Worm bekannt. Hier ist in den Stab zwischen den beiden ortsfesten Blockiervorrichtungen ein Linearaktuator in Form eines piezoelektrischen Festkörperaktuators integriert, mit dem die Länge des Stabs auf seine Ansteuerung periodisch veränderbar ist. Wenn dabei beispielsweise die hinten liegende Blockiervorrichtung den Stab immer dann festlegt, wenn er mit dem Festkörperaktuator verlängert wird und im Bereich der vorne liegenden Blockiervorrichtung frei ist, und die vorne liegende Blockiervorrichtung den Stab immer dann festlegt, wenn er mit dem Festkörperaktuator verkürzt wird und im Bereich der hinteren Blockiervorrichtung frei ist, bewegt sich der Stab schrittweise nach vorne. Durch Tauschen der Funktion des Festlegens und Freigebens zwischen den Blockiervorrichtungen bewegt sich der Stab nach hinten. Auch die Blockiervorrichtungen des bekannten Linearmotors basieren auf piezoelektrischen Festkörperaktuataren, die mit hoher Frequenz ansteuerbar sind. Allerdings sind die Geschwindigkeiten beim Längsverfahren des Stabs, die mit dem bekannten Linearmotor erreichbar sind, nur gering, weil sie durch die relativ geringe Längendehnung des Stabs zwischen den Blockiervorrichtungen mit Hilfe des dort in den Stab integrierten Festkörperaktuators beschränkt sind. Außerdem ist der Gesamtverfahrweg des Stabs in jede Richtung auf den freien Abstand der Blockiervorrichtungen beschränkt, wovon sogar noch die Länge des in den Stab integrierten Festkörperaktuators abzuziehen ist. Für verschiedene Anwendungen ist der bekannte Linearschrittmotor daher nicht geeignet.

Beispielsweise für die direkte Ventilsteuerung in Benzin- und Dieselmotoren werden Verfahrgeschwindigkeiten für einen ein Ventil betätigenden Ventilstößel benötigt, die um zwei Größenordnungen höher liegen, als sie mit einem Inch-Worm realisierbar sind.

Ein Linearschrittmotor mit einem in zwei entgegengesetzten, Richtungen längsverfahrbaren Stab und mit zwei Blockier Vorrichtungen, mit denen Stab wechselweise festlegbar ist, ist auch aus der JP 02241373 A (in: Patent Abstracts of Japan, 1990) bekannt. Gegenüber dem zuvor beschriebenen Inch-Worm ist die Länge des Stabs konstant. Der Stab weist damit einen vereinfachten Aufbau auf. Es muss auch keine Ansteuerungsverbindung zu dem Stab vorgesehen sein. Zudem ist der Gesamtfahrweg des Stabs in beide Richtungen außer durch die Länge des Stabs selbst keinen Beschränkungen unterworfen. So können auch quasi endlose Stäbe, wie beispielsweise von einem Vorrat abgezogenes Material, sinnvoll gehandhabt werden. Statt der Länge des Stabs wird bei diesem Linearschrittmotor der Abstand der Blockiervorrichtungen voneinander verändert. Auch dieser bekannte Linearschrittmotor leidet darunter, dass die Linearaktuatoren in Form von Festkörperaktuatoren nur vergleichsweise kleine Stellwege aufweisen, so dass der Verfahrweg des Stabs bei jedem Schritt des Linearschrittmotors nur klein ist.

Bei dem zuletzt beschriebenen Linearschrittmotor weist auch jede der beiden Blockiervorrichtungen einen Festkörperaktuator auf, um den Stab hier gegenüber festzulegen.

Beispielsweise aus der DE 196 40 108 C1, DE 100 13 752 A1 und der DE 201 06 831 U1 sind Stellwegvergrößerungsvorrichtungen für die Festkörperaktuatoren bekannt, die Hebelanordnungen mit übersetzenden Hebelverhältnissen aufweisen, welche den Stellweg des jeweiligen Linearaktuators übersetzten. Die Gelenke dieser Hebelanordnungen sind insbesondere bei Betätigung der Festkörperaktuatoren in entgegengesetzten Richtungen und mit hoher Frequenz höchst problematisch.

Ein Linearschrittmotor mit den Merkmalen des Oberbegriffs des Patentanspruchs 1 ist aus der US 5,780,957 A bekannt. Bei diesem Linearschrittmotor wird die zwischen dem Stab einerseits und den Blockiervorrichtungen andererseits hervorgerufene Relativbewegung dazu genutzt, die Blockiervorrichtungen den ortsfesten Stabs entlang wandern zu lassen, um mit ihnen beispielsweise die Scheibe einer Kraftfahrzeugtür abzusenken oder anzuheben. Der zur Veränderung des Abstands der Blockiervorrichtung verwendete Linearaktuator ist ein Piezoaktuator, dessen Stellweg durch einen zwischen den beiden Blockiervorrichtungen wirkenden einarmigen Hebel, der um einen Schwenkbolzen gelagert ist, übersetzt wird. Bei jeder Veränderung des Abstands der beiden Blockiervorrichtungen ändert sich nur die Lage einer Blockiervorrichtung gegenüber einer ortsfesten Basis; d. h., bei Bewegung der Blockiervorrichtungen in einer Richtung den Stabs entlang ist immer die eine Blockiervorrichtung ortsfest, während der Abstand der beiden Blockiervorrichtungen vergrößert wird, während die andere Blockiervorrichtung ortsfest ist, während der Abstand der beiden Blockiervorrichtungen verringert wird. Diese Verringerung des Abstands der beiden Blockiervorrichtungen erfolgt bei dem bekannten Linearschrittmotor nicht durch den Linearaktuator selbst sondern durch Federn, die die beiden Blockiervorrichtungen gegeneinander beaufschlagen und die beim Vergrößern des Abstands der Blockiervorrichtungen zusammengedrückt werden. Die Blockiervorrichtungen des bekannten Linearschrittmotors weisen ebenfalls jeweils einen Piezoaktuator auf.

Aus der DE 100 46 137 A1 ist ein Linearschrittmotor mit einem in zwei entgegengesetzten Richtungen längsverfahrbaren Stab und mit zwei Blockiervorrichtungen, mit denen der Stab wechselweise festlegbar ist, bekannt, wobei jeder Blockiervorrichtung ein eigener Linearaktuator zugeordnet ist, um den Abstand der beiden Blockiervorrichtungen zu verändern. Die Linearaktuatoren der beiden Blockiervorrichtungen werden so angesteuert, dass sich bei jedem Ändern des Abstands der Blockiervorrichtungen die Lagen beider Blockiervorrichtungen gegenüber einer ortsfesten Basis in entgegengesetzten Richtungen ändern.

Aus der DE 199 36 732 C2 ist ein längenveränderliches stabförmiges Element mit einem Piezoaktuator bekannt. Dieses umfasst in seiner Grundversion zwei in Reihe geschaltete Stäbe, zwei Piezoaktuatoren und eine Stellwegvergrößerungsvorrichtung, die eine Hebelanordnung mit einem übersetzenden Hebelverhältnis aufweist und deren Gelenke Festkörpergelenke sind. Beim Ansteuern der Piezoaktuatoren übersetzt die Stellwegsvergrößerungsvorrichtung die Längenänderungen der Piezoaktuatoren in eine größere Änderung des Abstands der beiden Stäbe. Auch eine Version des längenveränderlichen stabförmigen Elements mit nur einem Piezoaktuator und einem Widerlager wird beschrieben.

Bekannte Direktantriebe für die Ventilsteuerung in Benzin- und Dieselmotoren weisen einen an einem Ventilstößel angeordneten Anker auf, der federelastisch in Richtung der

Ventilbewegung abgestützt ist. Zum Halten des Ventils in einer Offenstellung und in einer Geschlossenstellung ist jeweils ein Elektromagnet vorgesehen, der auf den Anker einwirkt. Die Bewegung des Ankers zwischen den beiden Stellungen erfolgt unter Einwirkung der Rückstellkraft seiner elastischen Abstützung. Die Bewegungsgeschwindigkeit ist damit von der Eigenfrequenz des gebildeten Feder-Masse-Systems abhängig. Obwohl ein solcher Direktantrieb zur Ventilsteuerung über viele Jahre entwickelt wurde (W. Salber et al.: Der elektromechanische Ventiltrieb - Systembaustein für zukünftige Antriebskonzepte, Teil 1 und 2 in MTZ Motortechnik Zeitschrift 61 (2000) und 61 (2001)), ist bislang keine Serienumsetzung erfolgt.

Es sind auch hydraulische Direktantriebe zur Ventilsteuerung angedacht worden. Hiermit ist grundsätzlich eine größere Anzahl von Parametern der Ventilbewegung steuerbar als bei dem zuletzt beschriebenen elektromagnetischen Ansatz; hydraulische Direktantriebe weisen jedoch eine begrenzte Dynamik auf.

### AUFGABE DER ERFINDUNG

Der Erfindung liegt die Aufgabe zugrunde, einen Linearmotor mit den Merkmalen des Oberbegriffs des Patent anspruchs 1 aufzuzeigen, mit dem grundsätzlich größere Geschwindigkeit beim Längsverfahren des Stabs realisierbar sind, so dass er beispielsweise als Direktantrieb zur Ventilsteuerung in Benzin- und Dieselmotoren geeignet ist.

### LÖSUNG

Die Aufgabe der Erfindung wird durch einen Linearschrittmotor mit den Merkmalen des Patentanspruchs 1 gelöst. Vorteilhafte Ausführungsformen des neuen Linearschrittmotors sind in den Unteransprüchen beschrieben.

### BESCHREIBUNG DER ERFINDUNG

Um dessen hochfrequente Ansteuerbarkeit und inhärenten Führungsqualitäten auszunutzen, ist jeder Linearaktuator des neuen Linearschrittmotors ein Festkörperaktuator. Dabei ist für jeden Linearaktuator eine Stellwegvergrößerungsvorrichtung vorgesehen, die den Stellweg des Linearaktuators in eine größere Änderung des Abstands der Blockiervorrichtungen übersetzt. Diese Stellwegsvergrößerungsvorrichtung realisiert einen Quantensprung bei den Verfahrgeschwindigkeiten des Stabs des Linearmotors, da der Verfahrweg des Stabs bei jedem einzelnen Schritt des Linearschrittmotors erheblich vergrößert wird. Jede Stellwegvergrößerungsvorrichtung weist zudem mindestens eine Hebelanordnung mit einem übersetzenden Hebelverhältnis auf. Bevorzugt sind Stellwegvergrößerungseinrichtungen mit mehreren hintereinander geschalteten Hebelanordnungen, deren übersetzende Hebelverhältnisse sich gegenseitig vervielfältigen. Bei den Stellwegvergrößerungseinrichtungen sind alle Gelenke Festkörpergelenke. Die elastischen Eigenschaften der Festkörpergelenke können dabei im Sinne einer hohen Eigensteifigkeit mit hoher Eigenfrequenz zur Realisation hoher Betätigungsfrequenzen ausgenutzt werden. Dies ist insbesondere dann unproblematisch, wenn Festkörperaktuatoren beispielsweise auf piezoelektrischer oder magnetostriktiver Basis eingesetzt werden, die in der Lage sind, sehr hohe Kräfte zur gezielten Überwindung der Eigensteifigkeiten aufzubringen.

Bei dem neuen Linearschrittmotor ändern sich beim Ändern des Abstands der Blockiervorrichtungen die Lagen beider Blockiervorrichtungen gegenüber einer ortsfesten Basis in entgegengesetzten Richtungen. Hierdurch wird bei gleicher Lageveränderung jeder Blockiervorrichtungen bereits der doppelte Verfahrweg für den Stab bei jedem Schritt realisiert.

Um den Abstand der Blockiervorrichtungen zu ändern, ist nur ein Linearaktuator vorgesehen.

Auch die Blockiervorrichtungen des neuen Linearschrittmotors können Festkörperaktuatoren aufweisen, um mit deren Hilfe den Stab wechselweise festzulegen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt die prinzipielle Anordnung des neuen Linearschrittmotors,
- **Fig. 2**: zeigt eine Stellwegvergrößerungsvorrichtung für einen Linearaktuator zum Ändern des Abstands von Blockiervorrichtungen des neuen Linearschrittmotors in einer ersten Ansicht,
- **Fig. 3**: zeigt die Stellwegvergrößerungsvorrichtung gemäß Fig. 2 in einer zu Fig. 2 senkrechten Ansicht in einer ersten Funktionsstellung,
- **Fig. 4**: zeigt die Stellwegvergrößerungsvorrichtung gemäß den Fig. 2 und 3 in einer Fig. 3 entsprechenden Ansicht in einer zweiten Funktionsstellung und
- **Fig. 5**: zeigt die Stellwegvergrößerungsvorrichtung gemäß den Fig. 2 bis 4 in einer den Fig. 3 und 4 entsprechenden Ansicht in einer dritten Funktionsstellung.

### FIGURENBESCHREIBUNG

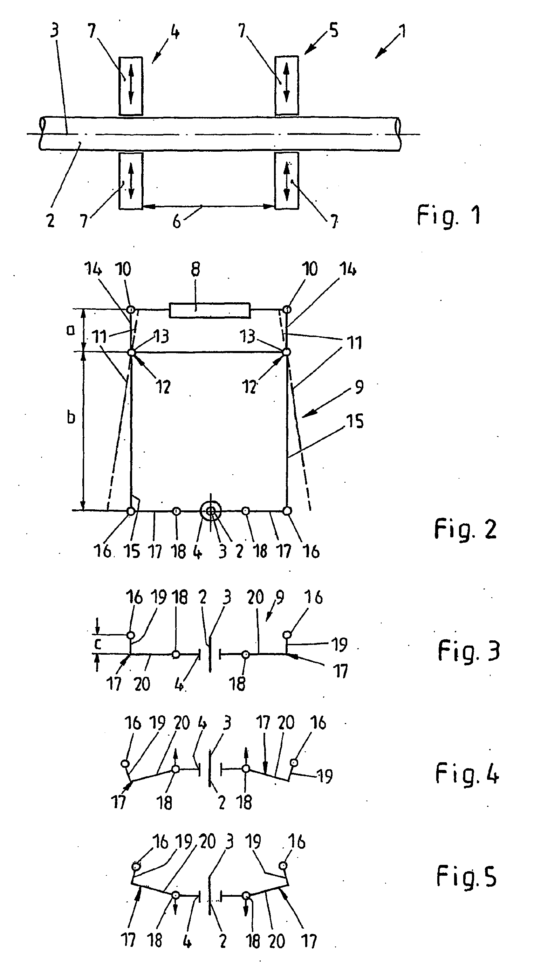

Der in **Fig. 1** skizzierte Linearschrittmotor 1 weist einen Stab 2 auf, der in Richtung seiner Längsachse 3 verfahrbar ist. Die Verfahrbarkeit des Stabs 2 wird mit Hilfe von zwei Blockiervorrichtungen 4 und 5 realisiert, deren Abstand 6 veränderbar ist. Die Veränderbarkeit des Abstands 6 kann darauf beruhen, dass nur eine der beiden Blockiervorrichtungen 4 oder 5 gegenüber der anderen beweglich ist, während die andere ortsfest ist. Es können aber auch beide Blockiervorrichtungen 4 und 5 gegenüber einer ortsfesten Base in entgegengesetzten Richtungen zueinander verfahrbar sein. In jedem Fall wird der Stab 2 wechselweise an den beiden Blockiervorrichtungen 4 und 5 festgelegt, während die Blockiervorrichtungen 4 und 5 periodisch auseinander und zusammengefahren werden. Wird beispielsweise der Stab 2 jeweils beim Zusammenfahren der Blockiervorrichtungen 4 und 5, d.h. beim Verringern des Abstands 6 an der Blockiervorrichtung 4 festgelegt, während er an der Blockiervorrichtung 5 frei ist und sich gegenüber dieser verschieben kann, und jeweils beim Auseinanderfahren der Blockiervorrichtungen 4 und 5, d.h. beim Vergrößern des Abstands 6 an der Blockiervorrichtung 5 festgelegt, während er an der Blockiervorrichtung 4 frei ist, und wird das Zusammenfahren und Auseinanderfahren der Blockiervorrichtungen mehrfach wiederholt, so bewegt sich der Stab 2 dabei in Richtung seiner Längsachse 3 schrittweise nach rechts gemäß Fig. 1. Wird die Ansteuerung der Blockiervorrichtungen 4 und 5 umgekehrt, bewegt sich der Stab 2 in der entgegengesetzten Richtung schrittweise nach links gemäß Fig. 1. Die Blockiervorrichtungen 4 und 5 können zum Festlegen des Stabs 2 jeweils Festkörperaktuatoren 7 aufweisen, wobei der Stab 2 beim Ansteuern der Festkörperaktuatoren 7 festgeklemmt wird. Bei den Festkörperaktuatoren 7 kann es sich insbesondere um piezoelektrische oder magnetostriktive Aktuatoren handeln.

Zum Verändern des Abstands 6 zwischen den Blockiervorrichtungen 4 und 5 ist in jedem Fall ein Festkörperaktuator 8 vorgesehen sein. Um den Stellweg dieses Festkörperaktuators 8 zu vergrößern, damit der Stab 2 in jedem Schritt des Linearschrittmotors 1 gemäß Fig. 1 um einen relativ großen Weg verschoben wird, ist eine Stellwegvergrößerungsvorrichtung 9 vorgesehen, die in Fig. 2 skizziert ist. Der Festkörperaktuator 8 ist über Gelenke 10 an zwei zweiarmige Übersetzungshebel 11 angelenkt, die jeweils um Gelenke 12 mit Schwenkachsen 13 verschwenkbar gelagert sind, wobei der Abstand der Schwenkachsen 13 untereinander fest ist und die Gelenke 10 an den freien Enden der kürzeren Arme 14 der Übersetzungshebel 11 angeordnet sind. Die längeren Arme 15 der Übersetzungshebel 11 greifen über Gelenke 16 an Zwischenhebel 17 an, die über weitere Gelenke 18 an der hier wiedergegebenen Blockiervorrichtung 4 angreifen. Durch die Blockiervorrichtung 4 verläuft der Stab 2. Wenn der Festkörperaktuator 8 im Sinne einer Längenkontraktion angesteuert wird, bewegen sich die Gelenke 10 aufeinander zu und die Übersetzungshebel 11 neben die in Fig. 2 gestrichelt wiedergegebene Ausrichtung ein. Dies führt zu einer Lageverschiebung der Blockiervorrichtung 4 senkrecht zur Zeichenebene der Fig. 2, wie jetzt anhand der Fig. 3 bis 5 näher erläutert wird.

Fig. 3 zeigt die Grundstellung und lässt erkennen, dass die Zwischenhebel 17 Winkelstücke sind, deren kürzeren Arme 19 in der Grundstellung parallel zu der Längsachse 3 des Stabs 2 verlaufen und deren längere Arme 20 in Fig. 3 senkrecht zu der Längsachse 3 ausgerichtet sind. Wenn jetzt der Aktuator 8 gemäß Fig. 2 so angesteuert wird, dass sich die Gelenke 10 aufeinander zu bzw. die Gelenke 16 voneinander weg bewegen, ergibt sich die in Fig. 4 wiedergegebene Funktionsstellung. Die Zwischenhebel 17 werden an den Gelenken 16 auseinander gezogen. Dadurch bewegen sich die Gelenke 18 in Fig. 4 nach oben und nehmen dabei die Blockiervorrichtung 4 mit. Umgekehrt bewegen sich die Gelenke 18 und die Blockiervorrichtung 4 beim Zusammendrücken der Gelenke 16, das einem Auseinanderdrücken der Gelenke 10 gemäß Fig. 2 entspricht, nach unten, wie in Fig. 5 skizziert ist. Die gesamte Stellwegübersetzung der Stellwegvergrößerungsvorrichtung 9 gemäß den Fig. 2 bis 5 kann durch das Produkt b/a*d/c abgeschätzt werden, wobei a die Länge der kurzen Arme 14 und b die Länge der langen Arme 15 der Übersetzungshebel 11 ist, während c die Länge der kurzen Arme 19 und d die Länge der langen Arme 20 der Zwischenhebel 17 ist. Im Gegensatz zu den Übersetzungshebeln 11, die zusätzlich an den Gelenken 12 gelagert sind, sind die Zwischenhebel 17 nur an ihren Enden gelenkig aufgehängt. Alle Gelenke 10, 12, 16 und 18 der Stellwegvergrößerungsvorrichtung 9 sind Festkörpergelenke mit einer auf den Festkörperaktuator 8 abgestimmten Eigensteifigkeit. Der Festkörperaktuator 8 bewegt bei dem Linearschrittmotor gemäß Fig. 1 gleichzeitig beide Blockiervorrichtungen 4 und 5 in entgegengesetzten Richtungen, hierzu sind die Zwischenhebel 17 spiegelbildlich zu einer senkrecht zu der Längsachse 3 des Stabs 2 zwischen den Blockiervorrichtungen 4 und 5 verlaufenden Symmetrieebene angeordnet, D.h., für jede Blockiervorrichtung 4 bzw. 5 ist ein eigenes Paar von Zwischenhebeln 17 vorgesehen. Die Übersetzungshebel 11 können aber beispielsweise für beide Blockiervorrichtungen 4 und 5 gemeinsam vorgesehen sein, so dass hier ein einziges Paar ausreicht. Natürlich ist es auch möglich, für jede Blockiervorrichtung 4 und 5 ein eigenes Paar von Übersetzungshebeln 11 vorzusehen.

Bei dem neuen Schrittmotor kann der Verfahrweg des Stabs 2 in jedem .Schritt durch die Stärke der Ansteuerung des Festkörperaktuators 8 variiert werden. Die Verfahrgeschwindigkeit des Stabs 2 ist durch die Frequenz, mit der die Festkörperaktuatoren 7 und 8 angesteuert werden, variabel. Der Gesamtverfahrweg des Stabs 2 kann durch die Anzahl der einzelnen Verfahrschritte festgelegt werden und kann dabei eine beliebige Größe annehmen.

### BEZUGSZEICHENLISTE

- 1: Linearschrittmotor
- 2: Stab
- 3: Längsachse
- 4: Blockiervorrichtung
- 5: Blockiervorrichtung
- 6: Abstand
- 7: Festkörperaktuator
- 8: Festkörperaktuator
- 9: Stellwegvergrößerungsvorrichtung
- 10: Gelenk
- 11: Übersetzungshebel
- 12: Gelenk
- 13: Schwenkachse
- 14: Arm
- 15: Arm
- 16: Gelenk
- 17: Zwischenhebel
- 18: Gelenk
- 19: Arm
- 20: Arm

## Patentansprüche

1. Linearschrittmotor (1) mit einem in zwei entgegengesetzten Richtungen längsverfahrbaren Stab (2) und mit zwei Blockiervorrichtungen (4, 5), mit denen der Stab wechselweise festlegbar ist, wobei der Abstand der Blockiervorrichtungen mit mindestens einem Linearaktuator in Form eines Festkörperaktuator (8) veränderlich ist, wobei zum Verfahren des Stabs (2) in eine der beiden Richtungen die eine Blockiervorrichtung den Stab festlegt, während sich die Blockiervorrichtungen aufeinander zu bewegen, und die andere Blockiervorrichtung den Stab festlegt, während sich die Blockiervorrichtungen voneinander weg bewegen, wobei für den Linearaktuator eine Stellwegvergrößerungsvorrichtung (9) vorgesehen ist, die mindestens eine Hebelanordnung (11) mit einem übersetzenden Hebelverhältnis aufweist, welche den Stellweg des Linearaktuators in eine größere Änderung des Abstands der Blockiervorrichtungen (4, 5) übersetzt, **dadurch gekennzeichnet, dass** der eine Linearaktuator gleichzeitig beide Blockiervorrichtungen in entgegengesetzten Richtungen bewegt, so dass sich beim Ändern des Abstands (6) der Blockiervorrichtungen (4, 5) die Lagen beider Blockiervorrichtungen (4, 5) gegenüber einer ortsfesten Basis in entgegengesetzten Richtungen ändern, wobei alle Gelenke (10, 12, 16, 18) jeder Stellwegvergrößerungsvorrichtung (9) Festkörpergelenke sind.

2. Linearschrittmotor nach Anspruch 1, **dadurch gekennzeichnet, dass** jede Blockiervorrichtung (4, 5) einen Festkörperaktuator (7) aufweist.

3. Direktantrieb zur Ventilsteuerung in Benzin- und Dieselmotoren mit einem Linearschrittmotor nach einem der Ansprüche 1 und 2.

## Claims

1. A linear step motor (1) comprising a shaft (2) witch is longitudinally moveable in two opposite directions, and two blocking devices (4, 5) with which the shaft can alternately be fixed, the distance between the blocking devices being modifiable by means of a linear actuator in form of a solid type-actuator (8), one blocking device fixing the shaft (2) when the blocking devices move towards each other, and the other blocking device fixing the shaft when the blocking devices moving away from each other, in order to displace the shaft in one direction, an operation distance enlarging device (9) being provided for the linear actuator which comprises at least one lever arrangement (11) having an transforming leverage which translates the operation distance of the linear actuator into an enlarged variation of the distance of the blocking devices (4, 5), **characterized in that** the one linear actuator simultaneously moves both blocking devices in opposite directions, so that the positions of both blocking devices (4, 5) are varied in opposite directions with regard to a fixed basis upon varying the distance (6) of the blocking devices (4, 5), all joints (10, 12, 16, 18) of each operation distance enlarging device (9) being solid-type joints.

2. The linear step motor of claim 1, **characterized in that** each blocking device (4, 5) comprises a solid-type actuator (7).

3. Direct drive for valve control in Otto and Diesel engines with a linear step motor according to any of the claims 1 and 2.

## Revendications

1. Moteur linéaire pas à pas avec une tige (2) pouvant se déplacer longitudinalement dans deux sens opposés et avec deux dispositifs de blocage (4, 5) aux moyens desquels la tige peut être bloquée alternativement, l'écart entre les dispositifs de blocage pouvant être modifié au moyen d'au moins un organe de commande linéaire sous forme d'un actuateur à l'état solide (8), l'un des dispositifs de blocage fixant la tige tandis que les dispositifs de blocage se rapprochent l'un de l'autre et l'autre dispositif de blocage fixant la tige tandis que les dispositifs de blocage s'éloignent l'un de l'autre, afin de déplacer la tige (2) dans un sens ou dans l'autre, un dispositif amplifiant le parcours de réglage (9) pour l'organe de commande linéaire étant prévu, qui présente au moins un système de leviers (11) avec un rapport de démultiplication entre les leviers qui convertit le trajet de réglage de l'organe de commande linéaire en une modification plus importante de l'écart entre les dispositifs de blocage (4, 5), **caractérisé en ce que** l'organe de commande linéaire déplace en même temps les deux dispositifs de blocage en sens opposés, de sorte que lors de la modification de l'écart (6) entre les dispositifs de blocage (4, 5), les positions des deux dispositifs de blocage (4, 5) par rapport à une base fixe changent en sens opposé, toutes les articulations (10, 12, 16, 18) de chaque dispositif amplifiant le parcours de réglage (9) étant des articulations à l'état solides.

2. Moteur linéaire pas à pas selon la revendication 1, **caractérisé en ce que** chaque dispositif de blocage (4, 5) présente un actuateur solide (7).

3. Entraînement direct pour la commande d'une soupape dans des moteurs diesel et à essence avec un moteur linéaire pas à pas selon l'une des revendications 1 et 2.
